# EUROPEAN PATENT SPECIFICATION

(11) **EP 3 800 320 B1**
(45) Date of publication and mention of the grant of the patent: **22.10.2025**
(21) Application number: 19200977.7
(22) Date of filing: 02.10.2019
(51) Int. Cl.: E06B 9/68, H02S 20/22, H02S 40/34, H02J 7/35

(54) **POWER SUPPLY SOLUTION FOR POWERING A POWER CONSUMPTION DEVICE OF A BUILDING EQUIPMENT**
STROMVERSORGUNGSLÖSUNG ZUR STROMVERSORGUNG EINES STROMVERBRAUCHERS EINER GEBÄUDEAUSRÜSTUNG
SOLUTION D'ALIMENTATION POUR ALIMENTER UN DISPOSITIF DE CONSOMMATION D'ÉNERGIE D'UN ÉQUIPEMENT DE CONSTRUCTION

(43) Date of publication of application: 07.04.2021
(73) Proprietor: VKR Holding A/S, 2970 Hørsholm (DK)
(72) Inventor: SØRENSEN, Alex, 2970 Hørsholm (DK); THOMSEN, Jan, 2970 Hørsholm (DK)
(74) Representative: Høiberg P/S

(56) References cited:
- EP-A1- 0 668 431
- EP-A1- 0 916 781
- JP-A- 2009 270 382
- US-A- 4 951 730
- US-A1- 2011 162 809

## Description

The present disclosure relates to a window or architectural covering system comprising a window and/or an architectural covering.

### Background

Building equipment such as windows, for example roof windows, may be installed with various electronic loads/power consumption devices in order to be able to provide various functionalities.

Such electronic loads/power consumption devices may e.g. be electric motors for adjusting the position of the window (of the window is a hinged window), one or more electric screening drivers/motors for operating a screening assembly such as a roller shutter and/or a blind, one or more sensors, a radio transceiver for receiving and transmitting radio signals, a control system for controlling the devices according to a predefined control scenario and/or control input from controllers such as a remote control and/or the like.

Powering of such electronic loads/power consumption devices may be provided directly by the utility grid/mains, but this is often disadvantageous due to higher installation costs and the possible need for undesired visible power supply wires. Hence, another solution is to install a rechargeable power unit in the building equipment, and a photovoltaic power supply may be installed in order to recharge the rechargeable power unit.

EP 3 267 212 A1 discloses a solution for selecting a solar panel for the production of a motor operated device for use in a window opening, and a rechargeable battery can be recharged by the solar panel. EP 2 597 245 A1 discloses another solution where solar cell panels are installed at a window to provide electric power. EP 0 916 781 A1 discloses a sun-blind having a frame or housing provided with lighting means, which are preferably powered by solar cell means. EP 0668 431 A1 discloses an electrical drive, the motor of which may be powered by a battery charged by a solar module.

However, the presently known solutions may suffer from drawbacks in relation to e.g. assuring sufficient power supply to a rechargeable battery for powering electronic loads/power consumption devices of building equipment such as window and/or architectural covering solutions. The present disclosure e.g. provides a cost efficient and user friendly solution for this problem.

### Summary

The present disclosure relates to a window or architectural covering system comprising a window and/or an architectural covering according to claim 1.

Control of building equipment such as windows or coverings has been increasingly automated over the recent years so that an electrically driven drive unit, such as an electrically driven chain actuator, spindle, a tubular motor or the like, can open and close or in other ways adjust the building equipment. The building equipment may e.g. be a window, e.g. a roof window, or a covering such as a shutter, e.g. a roller shutter, a blind such as a venetian blind or roller blind or the like. These are controlled by the drive unit in response to various input parameters and conditions. This may e.g. be based on sensor input or the like and controlled by automatic control circuitry such as a drive controller comprising a microprocessor unit.

However, the present inventors have realized that the amount of activation of the drive unit may differ significantly from installation location to installation location, and may depend on automation settings and user preferences at the respective installation site. Additionally, the geographical location of the installation site for the window and/or covering may influence significantly on the amount of (e.g. automatic) activation of the drive unit. Additionally, the geographical location of the installation site may influence on the amount of solar power available over time (for example, in tropic and sub tropic climates the energy in the sun over 24 hours may be substantially higher than in some areas of a tempered climate). Moreover, shadow conditions or other local conditions such as orientation of the solar panel (i.e. facing north, south, east or west) at the installation sites. The above conditions may moreover change significantly over a year.

This provides that the amount of parameters influencing on the actual amount of stored energy in the rechargeable battery over time may differ significantly from installation site to installation site.

The present inventors have realized that a single solar/photovoltaic panel may provide sufficient charging capacity for the majority of installation locations and operation conditions, and will assure sufficient charging of the battery due to the energy harvested from the sunlight. However, in some limited situations, a single "standard" charging capacity solar/photovoltaic panel may not be sufficient.

Hence, in a few situations, if installing a single cost efficient "standard/ conventional" solar/photovoltaic panel of a lower rated charging power, the local conditions at the installation site may in certain situations over time turn out to result in that the solar/photovoltaic panel may not be sufficient to keep the rechargeable battery sufficiently charged due to the local conditions at the installation site, but this may be very hard to predict.

The present disclosure provides a user friendly and cost efficient solution for enabling that the system can be adapted individually so that sufficient power can be supplied to charge the rechargeable battery in almost all relevant installation sites. This can easily be provided case by case by providing a retro-fitting of the further, second solar/photovoltaic panel by means of the second further power supply connector. In the case that specific, local conditions or use scenarios turns out over time to require a larger charging capacity in order to assure a sufficiently charged battery, an operator or even the user him/herself may easily install the further photovoltaic power supply panel by means of the further power supply connector. This is enabled while providing increased assurance of a controlled installation solution of the further panel, and hence the risk of erroneous installations resulting in e.g. problems with water and hence short circuit situations, or problems with bad galvanic connections over time may be reduced.

This present disclosure may hence provide a cost efficient and at the same time user friendly solution for enabling assurance of sufficient powering of more advanced control systems for a window or architectural covering, while also reducing the risk of subsequent malfunctions.

The difference between the first and second panel connector connectors may in addition to providing a simple and cost efficient antenna solution also help to ensure reduced risk of erroneous installation at a manufacturing facility or at the installation site, and it may moreover help to provide a space saving solution.

In one or more aspects of the present disclosure, the window or architectural covering system is a window system such as a roof window system, and said electrically driven drive unit is an electric motor configured to move a hinged window sash (6) of the window.

In one or more aspects of the present disclosure, said window or architectural covering system may be an architectural covering such as a roller shutter or a blind (e.g. venetian blind or roller blind), configured to cover a window pane, and the electrically driven drive unit is configured to operate the architectural covering.

In one or more aspects of the present disclosure, an electric circuitry, such as a hardwired electric circuitry, is configured to provide that said first photovoltaic panel and the further photovoltaic panel are connected in parallel when connected to the first and second photovoltaic panel connectors respectively to recharge the rechargeable battery unit.

This hard wiring may e.g. be provided on a printed circuit board or alternatively by means of insulated wires.

This provides an advantageous coupling solution of the photovoltaic panels. In further aspects of the present disclosure, the first photovoltaic panel and the further photovoltaic panel may though be connected in series when connected to the first and second photovoltaic panel connectors respectively to recharge the rechargeable battery unit.

Said first and further photovoltaic panel connectors may each be connectors such as plugs or sockets. In one or more further embodiments of the present disclosure, the connectors may be placed on a Printed Circuit Board.

This may e.g. help to provide a secure, controlled, "standardized" and good galvanic connection over time. By arranging the connectors for example directly on the drive main PCB less wired connections exist and higher reliability is provided during assembly and operation.

If the connectors such as plugs or sockets are not placed on a PCB, they may instead be connected to insulated wires instead in further aspects of the present disclosure, which are then connected to an electronic circuitry at the PCB.

In one or more aspects of the present disclosure, the first and the further photovoltaic panel connectors are placed at and accessible from the same end of a drive unit enclosure, enclosing at least the drive unit comprising an electric motor, a gearing arrangement and the rechargeable battery unit. In one or more further embodiments of the present disclosure, an on/off switch may be placed at the same end same end of the drive unit enclosure as the first and the further photovoltaic panel connectors.

This may e.g. provide a simple and cost efficient solution as the panel connectors may be placed at the same PCB and/or in that the system may be more simple to produce, maintain and/or access subsequently. If the On/off switch for switching the system on and off is placed at the same end, substantially all relevant access to the system when e.g. providing a further photovoltaic panel may be provided at the same end so that the user may easily e.g. turn off the system during installation of the further photovoltaic panel, and afterwards turn it on again.

In one or more aspects of the present disclosure, the drive unit comprises a tubular motor with an output wheel, wherein the first and the further photovoltaic panel connectors are placed at and accessible from the same end of a tubular drive unit enclosure enclosing at least the drive unit and a gearing arrangement, wherein the output wheel is situated at an opposite end related to the photovoltaic panel connectors.

This may e.g. provide a space saving solution that is easy install, service/maintain and may also enable a more easy replacement of the motor in case of malfunction. Generally, by having connectors at the enclosure end, the risk of damage to the motor unit may be reduced, e.g. because the wires of the photovoltaic panel(s) can be easily disconnected.

In one or more aspects of the present disclosure, the first and further photovoltaic panel devices may both be releasable mounted at a mounting track, such as a common mounting track of the window or architectural covering, and wherein electric wires connects the respective first and further photovoltaic panel devices to each their said photovoltaic panel connector.

In one or more aspects of the present disclosure, the power supply system may comprise a boost converter, wherein the boost converter is configured to step up the output voltage of the first photovoltaic power supply panel when connected to the first power supply connector.

The boost converter, preferably a Pulse width modulated (PWM) boost/step up converter, may additionally help to provide that both charging efficient and cost efficient lower voltage photovoltaic power supply panels may be used for the first and also second photovoltaic power supply panel, and may be advantageous for charging optimization purposes. Also, or alternatively, the boost converter may provide an increased freedom of choice in selecting the type and/or performance of the solar/photovoltaic power panel(s).

In one or more aspects of the present disclosure, the boost converter is moreover configured to step up the output voltage of the further photovoltaic power supply panel when connected to the second, further power supply connector. The boost converter may hence in one or more aspects of the present disclosure be used for stepping up the output voltage of the first photovoltaic power supply panel as well as the further photovoltaic power if connected.

If the second photovoltaic power supply panel is also connected, the stepping up of the total voltage of the first and second/further photovoltaic power supply panel is provided by the boost converter. Naturally, the voltage of the photovoltaic power supply panels may depend on the individual characteristics of the panels, and if these are substantially similar and coupled in parallel, the total voltage determined on the parallel coupled panels may be about the same as if just the first photovoltaic power supply panel is used.

It should be understood that the boost converter steps up the voltage of the first and preferably also the second (if connected) photovoltaic power supply panel to a desired voltage, preferably to a voltage around the rated voltage of the rechargeable battery. For example it may in aspects of the present disclosure provide a voltage between 1-10V, such as between 1-5 V above the rated voltage of the rechargeable battery and/or within ±5V such as within ±2V of the rated battery voltage.

In one or more aspects of the present disclosure, the power supply system moreover comprises a charging controller configured to control re-charging of the rechargeable battery unit. This charging controller may comprise a Maximum Power Point Tracking (MPPT) control system, such as including a Perturb And Observe feature. This MPPT feature is configured to adapt the duty cycle and/or the period time of a Pulse width modulated (PWM) signal applied to a switching arrangement of the boost converter based on one or more measured output parameters of the photovoltaic power supply panel or panels.

When the solar irradiation and/or the ambient temperature changes, the position of the Maximum power point of the first and also the further (if present) photovoltaic power supply panel changes. The MPPT feature helps to adapt the load on the photovoltaic power supply panel or panels so that the photovoltaic power supply panel or panels are continuously operated around the Maximum Power Point when the solar irradiation and/or the ambient temperature changes over time.

Additionally, when/if adding the further photovoltaic panel to the system by means of the further connector, this will cause a significant change of the Maximum Power Point for the total photovoltaic panel system which now comprises the two panels, compared to when just the first panel is connected. The MPPT functionality of the charging controller however automatically provides an adaption to this new Maximum Power Point situation, and moreover to the specific individual characteristics of the installed photovoltaic panel or panels.

In one or more aspects of the present disclosure, the first photovoltaic power supply panel is connected to the first power supply connector so as to recharge the rechargeable battery unit, wherein the first photovoltaic power supply panel has a rated maximum output voltage that is below 10V DC, such as below 8V DC, for example below 6V DC, such as around 4.2V DC. Also or alternatively, in one or more aspects of the present disclosure, the second photovoltaic power supply panel may be connected to the second power supply connector so as to recharge the rechargeable battery unit, wherein said second photovoltaic power supply panel has a rated maximum output voltage that is below 10V DC, such as below 8V DC, for example below 6V DC, such as around 4.2V DC.

Using higher voltage photovoltaic panels may help to increase the assurance of sufficient charging of the rechargeable battery and may be adjusted in order to fit a desired battery charging voltage. These higher voltage photovoltaic panels are however rather cost expensive, and such solar/photovoltaic panels and the rechargeable battery may constitute a considerable part of the price of the electronics system for controlling the building equipment such as a window, or a covering.

The present inventors have realized that photovoltaic power supply panel has a lower rated maximum output voltage in the mentioned range may be more cost efficient and additionally in fact be able to provide a sufficient charging over time of a battery of a system for operating a window or architectural covering.

In one or more aspects of the present disclosure, the first and/or second photovoltaic power supply panel may have a rated maximum output voltage that is at least 1.2V such as at least 1.8V, e.g. at least 2.4V.

In one or more aspects of the present disclosure, said first and/or second photovoltaic power supply panels, when connected to the first and/or second power supply connector so as to recharge the rechargeable battery unit, may have a rated maximum output voltage that is at least 1.3 times lower, such as at least 2 times lower, for example at least 2.5 times lower than the rated output voltage of the rechargeable battery.

The rated output voltage of the rechargeable battery may be determined by measuring the battery voltage when the battery is charged to at least 90% such as at least 95% of the maximum capacity of the battery.

In one or more aspects of the present disclosure, said first and/or second photovoltaic power supply panel may be a crystalline, such as a mono crystalline, silicon photovoltaic power supply panel,

In one or more aspects of the present disclosure, said first and/or second photovoltaic power supply panel may comprise between 3 and 15 solar cells, such as between 5 and 9 solar cells.

Such photovoltaic power supply panels may be cost effective and also relatively efficient panels from a performance/price point of view. Each cell may have a Max. Voltage rating of 0.6 V. Hence providing e.g. a 4 cell panel may provide a photovoltaic power supply panel having a max rated voltage output of 4x0.6=2.4V. As another example, a 7 cell photovoltaic power supply panel may provide a max rated voltage output of 7x0.6=4.2V.

Said first photovoltaic panel connector and/or said second, further photovoltaic panel connector may both be sockets or plugs and each configured to receive a plug or socket of the respective first and second photovoltaic panel devices.

It is generally understood that the socket may comprise spring-loaded connection parts configured to provide a galvanic connection to pins of the plug.

In one or more aspects of the present disclosure, said first and further photovoltaic power supply panels may be configured to be placed at a common track, of said window or architectural covering, such as wherein the track is placed at the top part of the window or architectural covering system.

This may provide an easy adjustment of the number of photovoltaic power supply panels to be installed . Also this enhances the install or upgrade of photovoltaic units considering the window or architectural covering is usually remote and not easily accessed with tools etc. Because the panels may be countersunk in the track there is also less risk of damage. Further, the window glass lowE coatings of the pane(s) of the window may adversely affect the photovoltaic performance, so the mounting track allows for direct exposure of the photovoltaic panels.

In one or more aspects of the present disclosure, the control system may further comprising a drive controller configured to control the electrically driven drive unit, such as wherein the drive controller is configured to automatically initiate an operation of the electrically driven drive unit according to a predefined set of rules based on input information such as one, two, three or more of:
- temperature sensor information,
- light sensor information,
- time information,
- force sensor information determined based on one or more force sensors such as one or more strain gauges
- rain sensor information and/or
- battery status information.

A controller such as a microcontroller unit may hence operate the controlled driver at least partly automatically according to a predefined set of rules. This may e.g. be done in order to assure that water does not enter the building, that the temperature in a room is tried to be kept in a desired temperature range by natural ventilation, to avoid damage or the like due to too high wind loads, to reduce the risk of burglary and/or the like. However, such automation scenarios may operate automatically, and a high activity where the building equipment is adjusted automatically, such as opened and closed, many times according to the set of rules may require increased battery capacity. Additionally, a user may select adjustment of the drive unit by means of a wireless remote control.

The present solution provides a cost efficient and simple solution where the charging capacity can be increase in order to facilitate an increased battery drain due to more extensive automatized operation of the drive unit, also in situations where the amount of energy in the sunlight irradiation at the installation site may over time turn out to be insufficient in order to enable such more extensive automatized operation/adjustment.

The present disclosure moreover shows an electric, battery powered control system for operating a window or architectural covering, wherein said control system comprises:
- one or more power consumption devices comprising at least an electrically driven drive unit for adjusting the setting of a window or architectural covering, and
- a power supply system arranged to power the one or more power consumption devices.

The power supply system comprises:
a rechargeable battery unit configured to store electric power and supply electric power to the one or more power consumption devices, and
a first power supply connector configured to transfer electric power from a first photovoltaic power supply panel when the first photovoltaic power supply panel is connected to the first power supply connector so as to recharge the rechargeable battery unit.

The power supply system moreover comprises a second, further power supply connector configured to transfer electric power from a further photovoltaic power supply panel separate to the first photovoltaic power supply panel when the further photovoltaic power supply panel is connected to the second, further power supply connector so as to recharge the rechargeable battery unit.

This may e.g provide one or more of the above mentioned advantages.

Said control system may be placed inside a common enclosure unit, wherein the common enclosure unit encloses at least the electrically driven drive unit (such as an electric motor and preferably also a gear arrangement), the rechargeable battery unit, and preferably also a boost converter and a charging controller) for controlling the recharging of the rechargeable battery unit. The first and second photovoltaic power supply panels are configured to be placed external to the enclosure and be connected (e.g. by wires) to the first and second power supply connectors which are accessible at the enclosure by means of each their plug or sockets.

The electric, battery powered control system may be configured to provide a window or architectural covering (1) system according to one or more of the aspects described above and/or according to one or more of the claims when installed at a window or architectural covering.

### Figures

Aspects of the present disclosure will be described in the following with reference to the figures in which:
- Fig. 1: : illustrates a control system for operating a window or architectural covering according to embodiments of the present disclosure,
- Fig. 2: : illustrates a roof window system according to embodiments of the present disclosure,
- Fig. 3: : illustrates a plug/socket solution according to embodiments of the present disclosure,
- Fig. 4: : illustrates a system according to embodiments of the present disclosure arranged inside a tubular enclosure
- Fig. 5: : illustrates a system according to embodiments of the present disclosure for operating window,
- Fig. 6: : illustrates a boost converter controlled by means of a charging controller according to embodiments of the present disclosure,
- Fig. 7: : Illustrates a flow chart according to embodiments of the present disclosure, and
- Fig. 8: : illustrates an example where a Maximum Power Point MPP changes over time.

### Detailed description

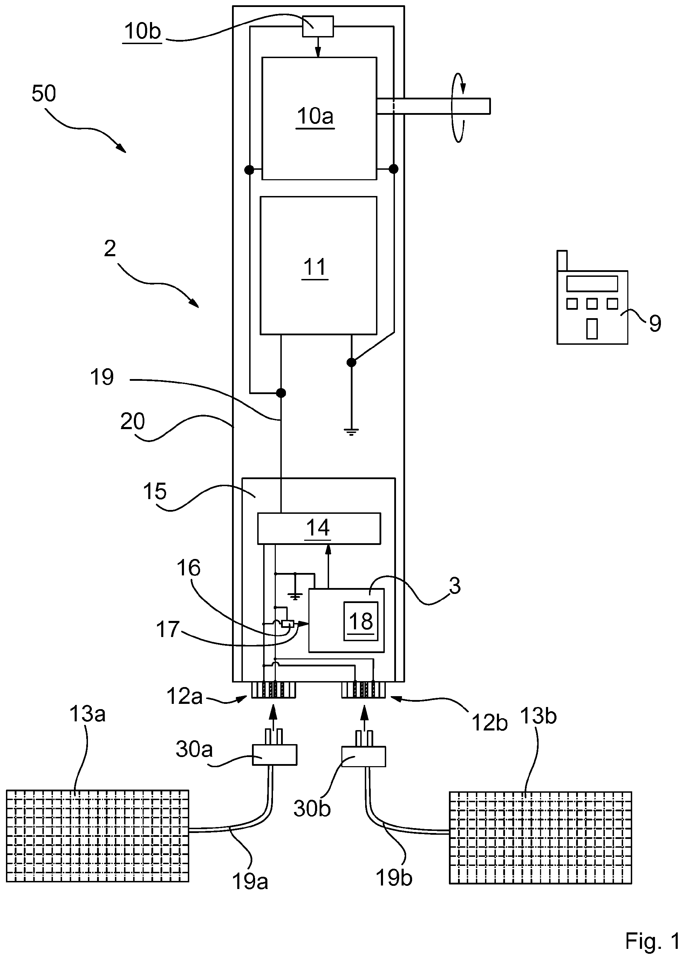

Fig. 1 illustrates schematically an electric, battery powered 50 control system for operating a window or architectural covering (not illustrated in fig. 1) according to embodiments of the present disclosure.

The system 50 comprises power consumption devices. In fig. 1, this comprises an electrically driven drive unit 10a for adjusting the setting of a window or architectural covering, and a drive controller 10b configured to control the electrically driven drive unit 10a based on one or more input signals and a control program code stored in a data storage (not illustrated) of the system 50.

The drive unit 10a may in embodiments of the present disclosure e.g. be an electrically driven push/pull chain actuator system, a spindle system, a tubular motor or the like configured to adjust a window sash, an architectural covering such as a roller shutter, a blind (e.g. roller blind or venetian blind) and/or the like.

The drive unit may in embodiments of the present disclosure comprise an electric motor and a gear unit (not illustrated).

In embodiments of the present disclosure the electrically driven drive unit 10a is provided in a wing such as a window. The drive unit 10a may be provided between a fixed frame and a hinged wing such that the wing can open and close related to the fixed frame. For example the drive unit 10a may be provided as a spindle actuator or a chain actuator.

In embodiments of the present disclosure the electrically driven drive unit 10a is provided in an architectural covering to deploy and retract the covering. For example, the drive unit 10a can be provided inside a winding tube of the covering. For example the drive unit 10a may be provided as a tubular motor.

The drive controller 10b may be a micro controller or other suitable control circuitry configured to control the drive 10a based on input from sensors such as rain sensors, temperature sensors, timers (such as "time on day" information) and/or the like (not illustrated in fig. 1) by means of an automation control program code executed by the drive controller 10b.

Additionally a user may in embodiments of the present disclosure provide control by means of a remote control 9 such as a remote control with a user interface (buttons and/or touch screen) specifically designed for the system (as illustrated) and possibly also comprising a display for presenting information to the human user.

The remote control 9 may also in further embodiments of the present disclosure be a tablet, smartphone or the like comprising an downloaded and installed software program providing a user interface (also known as an "app"). The user interface may be accessible by means of a touch screen (not illustrated in fig. 1) on the remote control 9, and the user may provide user interaction by means of voice recognition system, touching the touch screen and/or the like so as to transmit control signals to the system 50. Also, the user may receive status messages communicated to the user by means of screen and/or sound based on transmitted radio signals from the system 50.

The controller 10b is configured to control the electrically driven drive unit 10a and may be configured to automatically initiate an operation of the electrically driven drive unit 10a according to a predefined set of rules. These rules are stored in a program code (not illustrated in fig. 1). The program code, when executed, is configured to control the drive 10a based on input information such as one or more of:
- temperature sensor information,
- light sensor information,
- time information,
- force sensor information determined based on one or more force sensors such as one or more strain gauges
- rain sensor information and/or
- battery status information.

For example, according to embodiments of the present disclosure, when/if the battery charging gets below a predefined threshold, the controller 10 may automatically, execute an instruction to e.g. close a window, move a covering to a predefined position and/or the like. As another example according to embodiments of the present disclosure, a user may select that a covering such as a blind or shutter is automatically moved to a covering position in a predefined time span, such as at night, and automatically be moved by the drive 10a to an uncovering position at a predefined time in the morning. As a still further example according to embodiments of the present disclosure, the rain sensor may provide input so that the controller 10b controls the drive to automatically close a window when it rains. As an even further example according to embodiments of the present disclosure, the temperature sensor may trigger an automatic opening of closing of a window, or a movement between a covering or uncovering position of a covering such as a blind or shutter, dependent on the temperature measured by a temperature sensor and a predefined temperature threshold determined by e.g. a user, and/or the like.

The above may hence provide an automatic control of the window or architectural covering based on various parameters over time, which may at least to a certain extent be selected by a user and/or predefined in the mentioned program code.

The system 50 moreover comprises a power supply system 2 configured to power the power consumption devices 10a-10d with electric power.

The power supply system 2 comprises a rechargeable battery unit 11 in the form of a battery such as a Lithium ion (Li-ion) battery, a Nickel Cadmium (NiCd), a Nickel-Metal Hydride (NiMH) Battery or the like. The battery 11 may in embodiments of the present disclosure have a rated (maximum) power when substantially fully which is between 5Wh and 50Wh, such as between 10 Wh and 35 Wh, such as between 14 Wh and 26 Wh.

The rechargeable storage unit 11 is configured to store electric power and supply electric power to the power consumption devices 10a-10b when needed. For example, in response to an activation signal such as an "on", "off", "wind"/"rewind" signal or the like, the battery supplies the needed electric power for the driver 10a in order to enable the driver to move the window or architectural covering to the desired position/state.

The power supply system 2 additionally comprises a first power supply connector 12a. This is configured to transfer electric power from a first photovoltaic/solar power supply panel 13a when it is connected to the first power supply connector so as to recharge the rechargeable battery unit.

Additionally, the power supply system comprises a second, further power supply connector 12b. This is configured to transfer electric power from a further photovoltaic power supply panel 13b which is separate to the first photovoltaic power supply panel 13a. Hence, the further photovoltaic power supply panel 13b, when it is connected to the second, further power supply connector 12b, provides electric power retrieved from sunlight so as to recharge the rechargeable battery unit 11.

The first photovoltaic panel connector 12a and the second, further photovoltaic panel connector 12b are in fig. 1 both either sockets as illustrated in fig.1, such as spring loaded sockets, or plugs, and are each configured to receive a plug (as illustrated in fig. 1) or it may alternatively be a socket 30a, 30b of the respective first and second photovoltaic panel devices 13a, 13b.

Accordingly, the solar power panels, such as crystalline, e.g. mono crystalline, silicon photovoltaic power supply panels harvest/retrieves energy from sunlight and charges the battery 11 thereby.

It is generally understood that initially, the system 50 may be provided/sold with only the first photovoltaic power supply panel 13a. After installation, in case the local conditions at the installation location turns out to result in that the power supply panel 13a cannot provide sufficient charging power to the battery, the further photovoltaic power supply panel 13b can easily be connected to the further power supply connector 12b to provide increased charging capacity.

The first photovoltaic power supply panel 13a is, when connected to the first power supply connector 12a configured to recharge the rechargeable battery unit.11 when sufficient solar power is available. The same applies when the second panel 13b is connected to the second power supply connector 12b, and is hence thereby coupled in parallel with the first photovoltaic power supply panel 13a.

In the present example of fig. 1, a hardwired electric circuitry is configured to provide that the first photovoltaic panel 13a and the further second photovoltaic panel 13b are connected in parallel when connected to the first and second photovoltaic panel connectors (12a, 12b) respectively. This hard wiring may e.g. be provided on a printed circuit board (PCB) 15, on which the power supply connectors 12a, 12b may also be arranged in further embodiments of the present disclosure.

In embodiments of the present disclosure, the first photovoltaic power supply panel 13a and also the second photovoltaic power supply panel 13b may each have a rated maximum output voltage at substantially full sunlight (i.e. at least 90% of the maximum charging capacity of the panel) that is below 10V DC, such as below 8V DC, for example below 6V DC, such as around 4.2V DC.

For example, in embodiments of the present disclosure, the first and/or second photovoltaic power supply panel (13a) may have a rated maximum output voltage that is at least 1.3 times lower, such as at least 2 times lower, for example at least 2.5 times lower than the rated output voltage of the rechargeable battery.

In embodiments, the first and/or second photovoltaic power supply panel 13a, 13b may comprise between 3 and 15 solar cells, such as between 5 and 9 solar cells. These cells may be coupled in series in the panel. Each cell may provide 0.6V. Hence for example a 7 cell panel may thereby providing a 4.2 V (0.6 x 7) maximum rated output voltage.

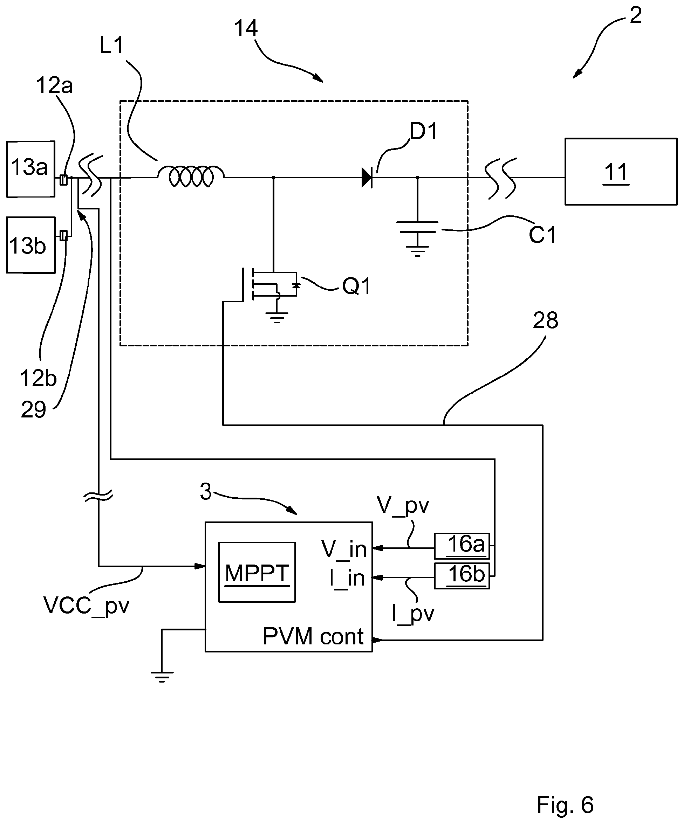

The power supply system 2 may as illustrated in the example of fig. 1 comprise a boost converter 14 configured to step up/increase the output voltage of the photovoltaic power supply panel 13a connected to the first power supply connector 12a, and preferably also to step up the output voltage of the further photovoltaic power supply panel 13b when it is connected to the second, further power supply connector. Embodiments of the boost converter 14 is described in more details later on in relation to fig. 6.

In order to control the recharging of the battery, the power supply system 2 may moreover, in one or more embodiments of the present disclosure, comprise a charging controller 3 configured to control the re-charging of the rechargeable battery unit 11 by controlling a switching device, such as a transistor arrangement of the boost converter 14, and thereby control the duty cycle of the boost converter.

The charging controller 3 may comprise a Maximum Power Point Tracking (MPPT) control system, such as including a "Perturb and Observe" feature.

The Maximum Power Point Tracking (MPPT) system is configured to adapt the load applied to the panels 13a, 13b, such as by adapting the duty cycle of a switching arrangement of the DC-DC Boost converter 14. This is based on based on one or more measured output parameters of the photovoltaic power supply panels. These parameters may comprise a measured output voltage of the at least one photovoltaic power supply panel 13a, 13b and/or a measured output current of the at least one photovoltaic power supply panel 13a, 13b. This is provided by measurement circuitry 16 configured to provide measured voltage and current information 17 to the charging controller 3. As can be seen, the charging controller 3, measuring circuitry 16 and boost converter 14 may be placed at the same PCB 15 in embodiments of the present disclosure.

The charging controller 3 is in embodiments of the present disclosure powered (not illustrated in fig. 1) alone by the panel or panels 13a, 13b, and not by the battery 11, and is configured to enter a sleep mode, such as an idling sleep mode when not in operation in order to save power. The charging controller 3 may be waken up automatically with a predefined time interval in order to execute the MPPT instructions based on new measured input information 17, and adjust the duty cycle of the switching arrangement of the boost converter 15 based on the MPPT result before entering sleep mode again.

However, the sleep mode may not stop a main clock of the charging controller 3, as this may be used for controlling the switching arrangement of the boost converter. This clock may hence be controlled by the Maximum Power Point Tracking (MPPT) system 18 to obtain the desired duty cycle and hence the desired pule width modulation (PWM) of the boost converter 14 in order to obtain a load on the panel 13a or panels 13a, 13b that provides that the panels are loaded at or close to their Maximum Power Point (MPP) in the given situation at the installation site while the charging controller 3 is in sleep mode.

A charging connection 19 connects the output of the boost converter 14 to the battery 11, and provides the power supply for charging the rechargeable battery 11.

As can be seen, the drive unit 10a, the battery 11 and the charging controller of the power supply system 2 may be arranged in a drive/control system enclosure 20, the panels 13a, 13b are though arranged outside this enclosure 20.

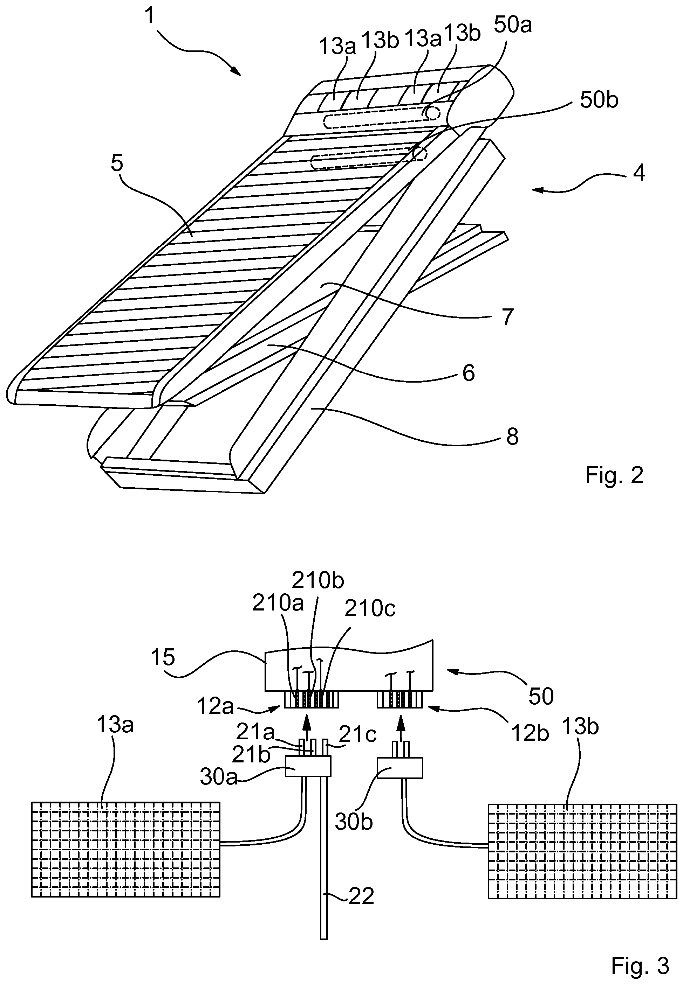

Fig. 2 illustrates schematically a roof window 4 according to embodiments of the present disclosure, seen in perspective.

The roof window comprises an adjustable sash 6 with an insulated glass pane 7 arranged therein. The sash 6 in the example of fig. 2 is a "centre pivot" sash, but it may also in other embodiments of the present disclosure be a top-hinged sash. The sash is configured to be moved at a hinged connection, relative to a fixed frame part 8 attached/fixed to a building construction such as a roof construction or the like.

In further embodiments of the present disclosure (not illustrated), the window 4 may be a vertical window configured to be arranged in an outer vertical wall of the building below the roof of the building.

As can be seen, the system in fig. 2 also comprises an architectural covering 5, in this example a roller shutter, but it may also be a blind such as a venetian blind, a roller blind or the like in further embodiments.

The Example of fig. 2 comprises both a window system 4, i.e. the roof window, and an architectural covering system 5, i.e. the roller shutter 5. Each of these comprises a system 50a, 50b for operating the respective window 4 or covering 5.

In the present example, a system 50b for operating the window is integrated in the window system 4. A first 13a and a second 13b photovoltaic power supply panel are both releasable mounted at a common mounting track 9 of the covering, arranged at the top part of the covering. Electric wires 19a, 19b (not illustrated in fig. 2, see fig. 1) connects the respective first and further photovoltaic panel devices 13a, 13b to each their photovoltaic panel connector 12a, 12b (see fig. 1).

If the covering 5 is absent, the window may itself comprise a mounting track 9 (not illustrated) and in case a covering such as a roller shutter is later added, the photovoltaic panel or panels 13a, 13b may be moved to the track 9 of the covering 5 instead.

In the present example, a system 50a for operating the shutter 5 is integrated in the covering system 5. A first 13a and a second 13b photovoltaic power supply panel are both releasable mounted at the same common mounting track 9 of the covering 5, arranged at the top part of the covering. Electric wires 19a, 19b (not illustrated in fig. 2, see fig. 1) connects the respective first and further photovoltaic panel devices 13a, 13b to each their photovoltaic panel connector 12a, 12b (see fig. 1) of the respective systems 50a, 50b.

The systems 50a, 50b are independent and may be configured to operate according to different sets of rules and comprises each their photovoltaic panel device(s) 13a, 13b, each their drive 10a and each their rechargeable battery 11 as well as each their charging controller 3 (see e.g. fig. 1).

It is understood that in other embodiments, one of the systems 50a, 50b may comprise just one panel 13a, whereas the other system may comprise two panels 13a, 13b, or in still further embodiments of the present disclosure, both may comprise just one 13a photovoltaic panel each.

It is understood that in further embodiments of the present disclosure, only a window 4 may be present having its own system 50b for operating the window, and the architectural cover 5 ant its control system 50a may hence be omitted.

The track 9 may comprise one or two (as illustrated) power supply panels 13a, 13b for holding the panel(s) for powering the system 50b that is arranged to control the sash 6 of window 4, and moreover one or two photovoltaic panel(s) (as illustrated) for powering the system 50a controlling the roller shutter 5.

Accordingly up to four photovoltaic panel(s) may in embodiments of the present disclosure be placed at the track 9 as illustrated in fig. 2, in case both power supply connectors 12a, 12b of both systems 50a, 50b are in use.

Fig. 3 illustrates schematically an embodiment of the present disclosure where the first power supply connector in the form of a plug or socket 12a comprises three galvanic separated connection parts.

Two of the three connection parts are configured to be galvanic connected to power supplying connection parts 21a, 21b of a plug 30a of the first photovoltaic power supply panel 13a so as to recharge the rechargeable battery 11 (not illustrated in fig. 3).

A third connection part of the first power supply connector 12a is configured to provide a galvanic connection to an antenna arrangement 22 via an antenna connection part 21c of a plug or socket of the plug 30a. The antenna arrangement 22 may be an electric wire or another suitable type of antenna having a predefined length determined based on a wave length of a radio signal used by a remote control 9 (see fig. 1). The antenna 22 is hence connected to a transceiver arrangement (not illustrated) configured to receive radio signals from the remote 9 and e.g. also transmit radio signals by means of the antenna 22, and the drive controller 10 may hence be operated based on radio signals received by means of the antenna 22.

The second, further power supply connector 12b is a plug or socket with no more than two galvanic separated connection parts configured to transfer electric power from the further photovoltaic power supply panel 13b when the further photovoltaic power supply panel 13b is connected to the second, further power supply connector 12b so as to recharge the rechargeable battery 11.

The power supply connectors 30a,30b are preferably male while the power supply connector 12a, 12b are preferably female. The connectors may have bodies configured with a pathway cross section that ensures the bodies can fit one way only. The connectors may have resilient protrusions functioning as a retention mechanism.

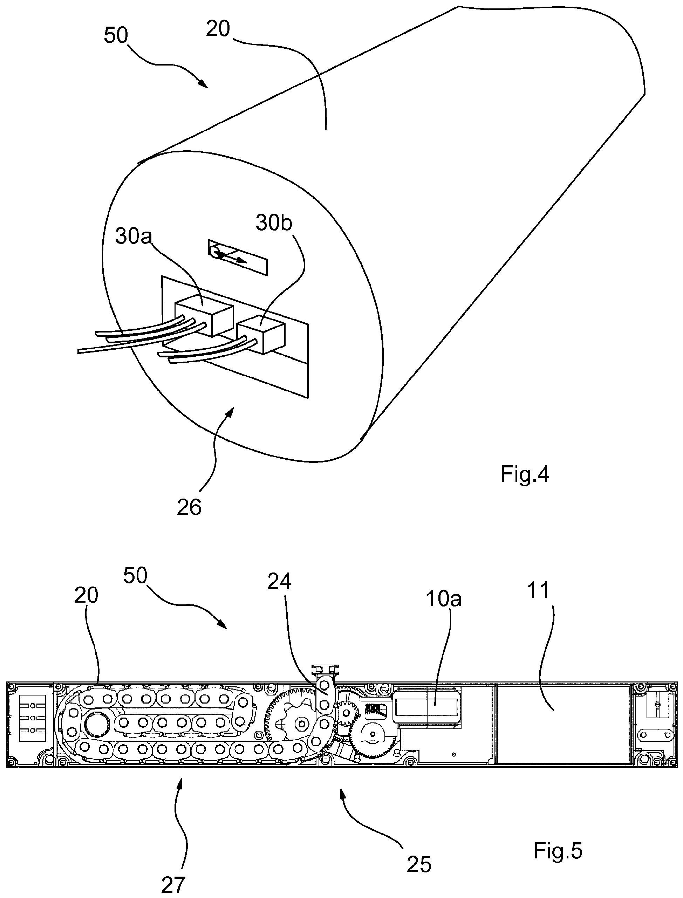

Fig. 4 illustrates schematically an embodiment of the present disclosure wherein the system 50 for operating the drive, as well as the drive unt 10a (see fig 1) are placed inside an oblong, tubular drive/control system enclosure 20. Here, the first and the further photovoltaic panel connectors 12a, 12b are both placed at and accessible from the same end of the drive/control system enclosure 20. The drive/control system enclosure 20 encloses at least the drive unit 2a comprising an electric motor (and possibly also a gear), and the rechargeable battery unit, and also the charging controller (if present) (not visible in fig. 4). In further embodiments of the present disclosure, an on/off 23 switch may as illustrated be placed at the same end of the enclosure 20 as the first and the further photovoltaic panel connectors 12a, 12b. The on/off switch 23 is configured to switches the system 50 on and off, and hence at least turn off the drive unit 10a and possibly also the charging controller and/or the drive controller (if present) when in off position.

The tubular enclosure 20 may in embodiments of the present disclosure enclose a tubular motor with an output wheel (not illustrated). Here, the first and the further photovoltaic panel connectors are placed at and accessible from the same end 26 of the tubular drive unit enclosure, and the output wheel is situated at an opposite end (not illustrated) of the enclosure 20 than the end 26 where the connectors 12a, 12b are placed.

Fig. 5 illustrates schematically an embodiment of the present disclosure in the form of a system 50 for operating window and comprising a push/pull chain 24. Power supply connectors, photovoltaic power supply panels, boost converter, charging controller and the like are omitted from fig. 5 in order to improve simplicity of the figure.

The push/pull chain 24 is configured to move a sash of a window when operated by the drive unit 10a, which is connected to the chain 24 through a gear arrangement 25. The enclosure 20 also comprises a storage for storing the push/pull chain when retracted into the enclosure/housing 20.The enclosure 20 here may have a rectangular, oblong outer shape/contour.

Fig. 6 illustrates schematically a boost converter 14 controlled by means of a charging controller 3 according to embodiments of the present disclosure.

The boost converter 14 comprises a boost converter circuitry comprising an inductor L1, a capacitor C1, a diode D1 and a switching arrangement Q1 such as a transistor coupled as shown in fig. 6 in order to provide a DC-DC Pulse Width Modulated (PWM) Switch mode power supply boost converter. The boost converter 14 may also be referred to as a step-up converter.

Filters such as capacitor-implemented filters (not illustrated in fig. 6) may also be provided in further embodiments of the present disclosure at the load/battery side of the converter 14 and/or at the input/supply side of the converter 14, in order to reduce undesired voltage ripples.

The charging controller 3, such as a suitable micro controller, is configured to control the switch Q1 of the boost converter in order to provide a desired PWM at the boost converter 14. This is provided by the PWM control signal 28.

The charging controller 3 hence received two inputs from Measuring circuitries. The first input V_pv is a voltage measuring provided by a measuring circuitry 16a and is indicative of the voltage at/of the output of the photovoltaic panel(s) 13a, 13b. The second input I_pv is a current measuring provided by a measuring circuitry 16b and is indicative of the electric current supplied by the photovoltaic panel(s) 13a, 13b.

In fig. 6 both photovoltaic panel(s) are connected to the Power supply system 2 by means of the connectors 12a, 12b, but in further embodiments, just the first panel 13a may be connected. The measuring of the parameters I_pv and V_pv are preferably provided so that the voltage measuring and current measuring is provided to represent the total voltage over the panels 13a, 13b in case and the total electric current provided by the panel(s) 13a, 13b irrespectively of if one or two panels 13a, 13b are connected. This may e.g. be provided by providing the measuring after the parallel coupling 29 (as illustrated) , or alternatively providing measuring at each individual panel 13a, 13b, and subsequently summarize the result.

The charging controller provides a Maximum Power Point Tracking (MPPT) based on the measured inputs I_pv, V_pv and provides a control of the load on the panels 13a, 13b based on the measured input. This load control is provided by adjusting the PWM signal to the switch Q1.

As can be seen in fig. 6, the charging controller 3 may in embodiments of the present disclosure be powered (VCC_pv) by the photovoltaic power supply panel 13a or panels 13a, 13b, and not the battery 11.

The charging controller 3 may in further embodiments of the present disclosure comprise a sleep mode which provides that the controller 3 enters a sleep mode, such as an "Idle sleep mode". Here, the Central Processing Unit of the controller 3 stops executing code, and an interrupt, such as a timer interrupt can wake up the CPU again to execute stored program code for implementing the MPPT functionality. However, even in sleep mode, a Main Clock of the charging controller 3 will run in order to control the switch by a switching frequency during sleep mode which is set by the MPPT function. This is done in order to provide a PWM of the boost controller 14 that fits or is near the Maximum Power Point of the photovoltaic panel or panels 13a, 13b, and that is provided automatically by the MPPT function no matter if one or two panel or panels 13a, 13b are connected.

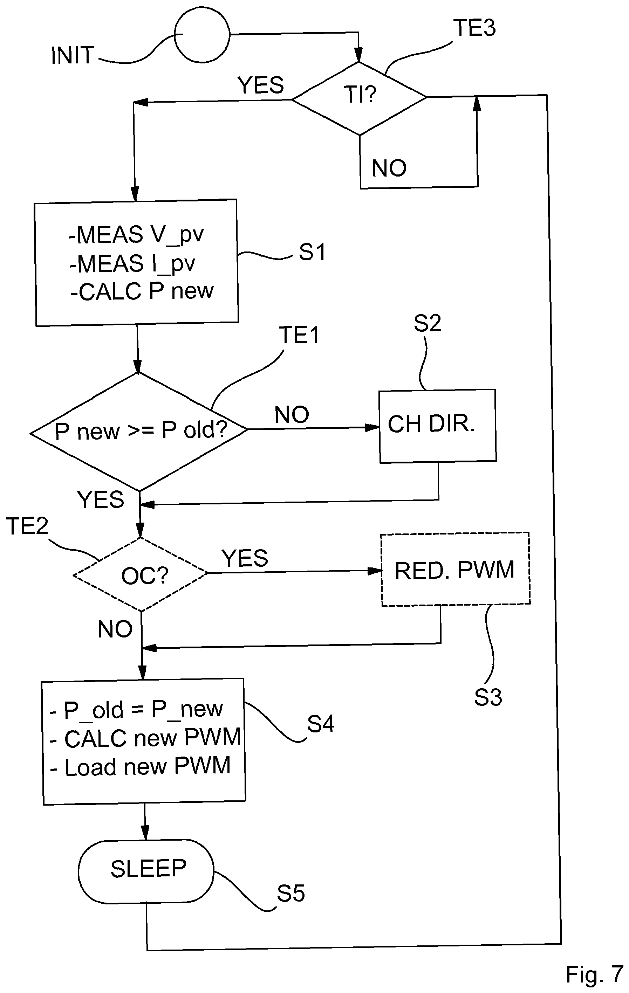

The MPPT function may e.g. in embodiments of the present disclosure provide a "Perturb and observe" MPPT regulation. Here, the controller 3 adjusts the load of the battery 11 by a small amount; if the power provided by the panel or panels 13a, 13b increases (based on I_pv and V_pv), further adjustments in that direction are tried until power no longer increases. The MPPT function is executed when the charging controller is not in sleep mode. The MPPT function is described in more details in fig. 7.

Fig. 7 illustrates a flow chart disclosing the operation of the charging controller 3 (see figs. 1 and 6) comprising a Maximum Power Point Tracking MPPT feature/functionality providing a "Perturb and Observe" feature according to embodiments of the present disclosure.

At the initial "power up" step (INIT) certain initiation functions of the Charging controller may be provided, such as initiating the main clock, setting or calculating a default /initial PWM, initiating interrupt functions, initiating ADC (Analog to digital converting circuitry) and/or the like.

Then, the charging controller 3 goes to sleep. At test TE3, the controller checks if an interrupt, such as a timer interrupt is present, if yes, Step 1 (S1) is executed.

In Step 1, the charging controller registers the measured Voltage V_pv of the photovoltaic element 13a, or elements 13a, 13b, and also the measured supplied current I_pv. Based on these measurements, a new power value (P new) is calculated (CALC P new).

Then the charging controller tests at TE1 whether the new power value of the photovoltaic element 13a, or elements 13a, 13b larger than or equal a previous old power value (P old).

If the new power value is not larger than or equal, the charging controller is set to change the PWM adjustment direction at step S2. Hereby, the PWM frequency and/or duty cycle may e.g. be reduced compared to the previous PWM frequency value or duty cycle or vice versa, dependent on the situation.

In test TE2, which is an optional test (as is step S3), the charging controller tests whether a charging current is higher than a desired value/threshold, if it is, the Pulse Width Modulation is reduced in order to avoid an over current situation.

In step S4, the older, prior power value is replaced with the new power value P_new determined at step S1.

Additionally, a new Pulse Width Modulation value is calculated. This is provided based on the test TE1. For example, in case test TE1 provides the result that the new power value P new is higher than the previous, the PWM duty cycle and/or period time may be continued to be increased by a predefined amount or a calculated amount determined by the charging controller.

If P_new is however lower than P old, the PWM may be regulated in another direction e.g. by instead reducing PWM duty cycle and/or period time (as set by Step S2 where the adjustment direction of the PWM signal is changed).

The Charging controller 3 may hence, according to one or more embodiments of the present disclosure, adjust the duty cycle and/or the period time of the duty cycle of PWM control signal 28, and hereby adjust the load applied on the panel 13a or panels 13a, 13b.

For example, the charging controller 3 may according to one or more embodiments of the present disclosure adjust the "on time" of the duty cycle of the PWM signal 28 dynamically to be within 1% to 60% of the period time dependent on the measured input (V_in, I_in) values.

Also or alternatively, the charging controller may according to one or more embodiments of the present disclosure adjust the period time of the duty cycle dynamically to be within a predefined range, such as within e.g. 1 microsecond to 4 milliseconds, such as within 2 microseconds to 3 milliseconds, such as such as within 5 microseconds to 2.5 milliseconds.

The new PWM value is then set/loaded so that the PWM frequency and/or duty cycle for the switch (Q1 of fig. 6) of the boost converter 14 is changed to the new value, and used while the controller has entered sleep mode.

Then the charging controller in step S4 enter sleep mode, and the test TE3, such as a timer interrupt test, is set awaited. When the timer interrupt TI? test turns out positive, the step S1 is executed again and so on.

The test TE1 and the steps S1, S2 and S4 accordingly provides a Maximum Power Point Tracking. Hence, Even though the Maximum power point MPP of the photovoltaic panel(s) changes over time dependent on temperature, solar light intensity and other possible parameters, the charging controller 3 will continue to "hunt" a load setting (by adjusting the PWM frequency and/or duty cycle) that fits the Maximum power point MPP of the photovoltaic panel(s) in the given situation.

The tests TE2 and steps S1, S2 and S4 provides that the PWM signal such as the period time and/or the duty cycle applied to the boost converter switch, and hence the load applied to the photovoltaic panel(s), is either increased or decreased so as to so to say constantly "hunt" and adapt to the Maximum power point MPP of the installed photovoltaic panel(s) system when it changes over time.

Additionally, the MPPT feature provides an automatic adaption to the maximum power point MPP in the given situation no matter if one or two photovoltaic panels are connected to the connectors 12a, 12b.

When adding a further photovoltaic panel (13b) to the system, this will cause a significant change of the Maximum Power Point for the total photovoltaic panel system which now comprising the two panels 13a, 13b (such as about by a factor of two dependent on the Photovoltaic panel installed), compared to when just the first panel 13a is connected. The MPPT functionality of the charging controller 3 however automatically provides an adaption to this new Maximum Power Point situation, and moreover to the specific individual characteristics of the installed photovoltaic panel or panels.

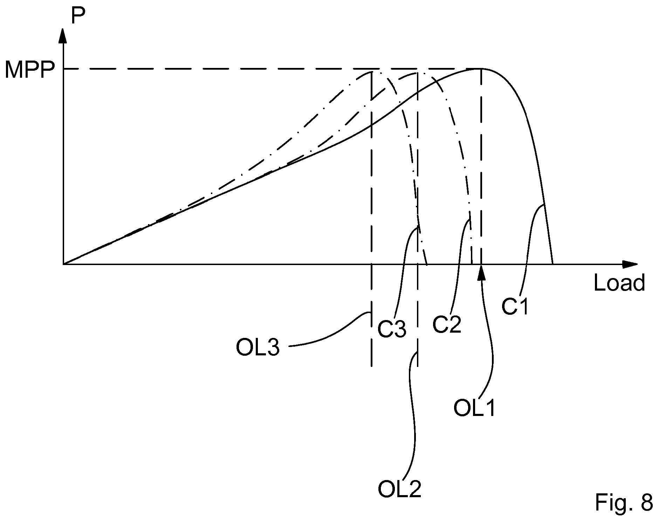

Fig. 8 illustrates an example where the Maximum Power Point MPP changes over time due to varying factors such as changes in solar light irradiation over time and/or due to a subsequent addition of the further second photovoltaic panel 13b (see previous description and e.g. fig. 1. The Maximum power point MPP of the first, solid curve C1 is positioned where it is due to the present solar irradiation and e.g. also the present ambient temperature. When the solar irradiation and/or the ambient temperature changes, so may the position of the MPP, as illustrated by the dashed/dotted lines.

Accordingly, by measuring/sampling voltage and current of the panel(s) 13a, 13b, determining a calculated power derived therefrom, and comparing it to previous measured power value, the charging controller with the MPPT feature will automatically adapt the load on the first photovoltaic panel 13a or the first and further panels 13a, 13b to be at or near the optimal load OL1, OL2, OL3. Hence, the panel or panels 13a, 13b performs at the Maximum Power Point according to the present situation over time irrespectively of variations in the amount of available solar irradiation, ambient temperature and//or other relevant parameters.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

### List

- 1: : Window or architectural covering system
- 2: : Power supply system
- 3: : Charging controller
- 4: : Window
- 5: : Architectural covering such as a blind or roller shutter
- 6: : Sash of window
- 7: : Pane in window sash
- 8: : Fixed frame of window
- 9: : Remote control
- 10a, 10b: : Power consumption devices
- 11: : Rechargeable storage unit/battery
- 12a: : First power supply connector
- 12b: : Second further power supply connector
- 13a: : First photovoltaic power supply panel
- 13b: : Further photovoltaic power supply panel
- 14: : Boost converter circuitry
- 15: : Printed Circuit Board
- 16: : Measuring circuitry such as voltage and/or current measuring circuitry
- 17: : Measured input to charging controller
- 18: : Maximum Power Point Tracking (MPPT) system
- 19a: : Wire between first photovoltaic power supply panel and first connector
- 19b: : Wire between second photovoltaic power supply panel and second connector
- 20: : Control/drive system enclosure
- 21a-21c: : connection parts for providing galvanic connections
- 22: : Antenna
- 23: : On/off switch
- 24: : Push/pull chain
- 25: : Gear arrangement
- 26: : End of housing/enclosure 20
- 27: : Chain storage
- 28: : PWM control signal
- 29: : Parallel coupling
- 30a, 30b: : Plug or socket on electric wire of photovoltaic power supply panel.
- 50, 50a, 50b: : System for operating window or architectural covering

## Claims

1. A window or architectural covering system (1) comprising a window (4) and/or an architectural covering (5), and a control system (50) for operating the window (4) or architectural covering (5), wherein the control system (50)comprises
at least one power consumption device (10a, 10b) comprising an electrically driven drive unit (10a) for adjusting the window and/or architectural covering, and
a power supply system (2) configured to power the at least one power consumption device (10a-10d), wherein the power supply system (2) comprises:
- a rechargeable battery unit (11) configured to store electric power and supply electric power to the at least one power consumption device (10a-10b), and
- a first power supply connector (12a) configured to transfer electric power from a first photovoltaic power supply panel (13a) when the first photovoltaic power supply panel (13a) is connected to the first power supply connector (12a) so as to recharge the rechargeable battery unit (11), and wherein the first photovoltaic power supply panel (13a) is connected to the first power supply connector (12a),
wherein the power supply system (2) moreover comprises a second, further power supply connector (12b) configured to transfer electric power from a further photovoltaic power supply panel (13b) separate to the first photovoltaic power supply panel (13a) when the further photovoltaic power supply panel (13b) is connected to the second, further power supply connector (12b) so as to recharge the rechargeable battery unit (11), and wherein said further photovoltaic power supply panel (13b) is connected to the second, further power supply connector (12b),
wherein said first and further power supply connectors (12a, 12b) both are plugs or sockets configured to receive a plug or socket (30a, 30b) of the respective first and second photovoltaic power supply panels (13a, 13b),
**characterised in that** said first power supply plug or socket (12a) comprises at least three galvanic separated connection parts (210a, 210b, 210c), wherein two (210a, 210b) of said at least three connection parts are configured to be galvanic connected to power supply connection parts (21a, 21b) of a plug or socket of said first photovoltaic power supply panel (13a) so as to recharge the rechargeable battery unit (11),
wherein a third connection part (210c) of the first power supply plug or socket (12a) is configured to provide a galvanic connection to an antenna arrangement (22) via an antenna connection part (21c) of a plug or socket of said first photovoltaic power supply panel (13a), and
wherein the second, further power supply connector (12b) is a plug or socket with no more than two galvanic separated connection parts configured to transfer electric power from the further photovoltaic power supply panel (13b) when the further photovoltaic power supply panel (13b) is connected to the second, further power supply connector (12b) so as to recharge the rechargeable battery unit (11).

2. A window or architectural covering system according to claim 1, wherein an electric circuitry (29), such as a hardwired electric circuitry, provides that said first photovoltaic panel (13a) and the further photovoltaic panel (13b) are connected in parallel when connected to the first and second power supply connectors (12a, 12b) respectively to recharge the rechargeable battery unit (11).

3. A window or architectural covering system according to any of the preceding claims, wherein the first and further power supply connectors (12a, 12b) are placed on a Printed Circuit Board (PCB) (15).

4. A window or architectural covering system according to any of the preceding claims, wherein the first and the further power supply connectors (12a, 12b) are placed at and accessible from the same end (26) of a drive unit enclosure (20), enclosing at least the drive unit comprising an electric motor, a gearing arrangement and the rechargeable battery unit (11),
wherein an on/off switch (23) may be placed at the same end (26) of the drive unit enclosure (20) as the first and the further power supply connectors (12a, 12b).

5. A window or architectural covering system according to any of the preceding claims, wherein the drive unit (10a) comprises a tubular motor with an output wheel, wherein the first and the further power supply connectors (12a, 12b) are placed at and accessible from the same end (26) of a tubular drive unit enclosure (20) enclosing at least the drive unit (10a) and a gearing arrangement, wherein the output wheel is situated at an opposite end related to the power supply connectors (12a, 12b).

6. A window or architectural covering system according to any of the preceding claims, wherein the power supply system (2) comprises a boost converter (14), wherein the boost converter (14) is configured to step up the output voltage of the first photovoltaic power supply panel (13a) when connected to the first power supply connector (12a).

7. A window or architectural covering system according to claim 6, wherein the boost converter (14) is moreover configured to step up the output voltage of the further photovoltaic power supply panel (13b) when connected to the second, further power supply connector (12b).

8. A window or architectural covering system according to claim 6 or 7, wherein the power supply system (2) moreover comprises a charging controller (3) configured to control re-charging of the rechargeable battery unit (11), and
wherein the charging controller (3) comprises a Maximum Power Point Tracking (MPPT) control system (18), such as including a Perturb And Observe feature, configured to adapt the duty cycle and/or the period time of a PWM modulated signal (28) applied to a switching arrangement (Q1) of the boost converter (14) based on one or more measured output parameters of the photovoltaic power supply panel (13a) or panels (13a, 13b).

9. A window or architectural covering system according to any of the preceding claims, wherein the first photovoltaic power supply panel (13a) is connected to the first power supply connector (12a) so as to recharge the rechargeable battery unit (11), wherein said first photovoltaic power supply panel (13a) has a rated maximum output voltage that is below 10V DC, such as below 8V DC, for example below 6V DC, such as around 4.2V DC,
and/or
wherein the second photovoltaic power supply panel (13a) is connected to the second power supply connector (12b) so as to recharge the rechargeable battery unit (11),
wherein said second photovoltaic power supply panel (13a) has a rated maximum output voltage that is below 10V DC, such as below 8V DC, for example below 6V DC, such as around 4.2V DC.

10. A window or architectural covering system according to any of the preceding claims, wherein said first and/or second photovoltaic power supply panel (13a, 13b) when connected to the first (12a) and/or second (12b) power supply connector so as to recharge the rechargeable battery unit (11), has a rated maximum output voltage that is at least 1.3 times lower, such as at least 2 times lower, for example at least 2.5 times lower than the rated output voltage of the rechargeable battery.

11. A window or architectural covering system according to any of the preceding claims, wherein said first and/or second photovoltaic power supply panel (13a, 13b) is a crystalline such as a mono crystalline, silicon photovoltaic power supply panel, and/or wherein said first and/or second photovoltaic power supply panel (13a, 13b) comprises between 3 and 15 solar cells, such as between 5 and 9 solar cells.

12. A window or architectural covering system according to any of the preceding claims, wherein said control system (50) is placed inside a common enclosure unit (20),
wherein the common enclosure unit (20) encloses at least the electrically driven drive unit (10a), the rechargeable battery unit (11), and preferably also a boost converter (14) and a charging controller (3) for controlling the recharging of the rechargeable battery unit (11), and
wherein said first and second photovoltaic power supply panels (13a, 13b) are placed external to the enclosure (20) and connected to the first and second power supply connectors (12a, 12b) which are accessible at the enclosure (20) by means of each their plug or socket (30a, 30b).

13. A window or architectural covering system according to any of the preceding claims, wherein said first and further photovoltaic power supply panels (13a, 13b) are configured to be placed at a common track (9), of said window (4) or architectural covering (5), wherein the track (9) may be placed at the top part of the window or architectural covering system.

14. A window or architectural covering system according to any of the preceding claims, further comprising a drive controller (10b) configured to control the electrically driven drive unit (10a), wherein the drive controller (10b) may be configured to automatically initiate an operation of the electrically driven drive unit (10a) according to a predefined set of rules based on input information such as one or more of:
temperature sensor information, light sensor information, time information, force sensor information determined based on one or more force sensors such as one or more strain gauges, rain sensor information and/or battery status information.

## Patentansprüche

1. Fenster- oder Architekturabdeckungssystem (1), umfassend ein Fenster (4) und/oder eine Architekturabdeckung (5) und ein Steuersystem (50) zum Betreiben des Fensters (4) oder der Architekturabdeckung (5), wobei das Steuersystem (50) umfasst wenigstens einen Stromverbraucher (10a, 10b), umfassend eine elektrisch angetriebene Antriebseinheit (10a) zum Anpassen des Fensters und/oder der Architekturabdeckung, und
ein Stromversorgungssystem (2), konfiguriert, um den wenigstens einen Stromverbraucher (10a-10d) mit Strom zu versorgen, wobei das Stromversorgungssystem (2) umfasst:
eine wiederaufladbare Batterieeinhheit (11), konfiguriert, um elektrische Energie zu speichern und elektrische Energie an den wenigstens einen Stromverbraucher (10a-10b) zu liefern, und
einen ersten Stromversorgungsanschluss (12a), konfiguriert, um elektrische Energie von einem ersten Photovoltaik-Stromversorgungsmodul (13a) zu übertragen, wenn das erste Photovoltaik-Stromversorgungsmodul (13a) mit dem ersten Stromversorgungsanschluss (12a) verbunden ist, um die wiederaufladbare Batterieeinhheit (11) aufzuladen, und wobei das erste Photovoltaik-Stromversorgungsmodul (13a) mit dem ersten Stromversorgungsanschluss (12a) verbunden ist,
wobei das Stromversorgungssystem (2) außerdem einen zweiten, weiteren Stromversorgungsanschluss (12b) umfasst, der konfiguriert ist, um elektrische Energie von einem weiteren Photovoltaik-Stromversorgungsmodul (13b), das von dem ersten Photovoltaik-Stromversorgungsmodul (13a) getrennt ist, zu übertragen, wenn das weitere Photovoltaik-Stromversorgungsmodul (13b) mit dem zweiten, weiteren Stromversorgungsanschluss (12b) verbunden ist, um die wiederaufladbare Batterieeinhheit (11) aufzuladen, und wobei das weitere Photovoltaik-Stromversorgungsmodul (13b) mit dem zweiten, weiteren Stromversorgungsanschluss (12b) verbunden ist,
wobei die ersten und weiteren Stromversorgungsanschlüsse (12a, 12b) beide Stecker oder Buchsen sind, die konfiguriert sind, um einen Stecker oder eine Buchse (30a, 30b) der jeweiligen ersten und zweiten Photovoltaik-Stromversorgungsmodule (13a, 13b) aufzunehmen,
**dadurch gekennzeichnet, dass der** erste Stromversorgungsstecker oder die erste Buchse (12a) wenigstens drei galvanisch getrennte Verbindungsbauteile (210a, 210b, 210c) umfasst, wobei zwei (210a, 210b) der wenigstens drei Verbindungsbauteile konfiguriert sind, um galvanisch mit Stromversorgungsverbindungsbauteilen (21a, 21b) eines Steckers oder einer Buchse des ersten Photovoltaik-Stromversorgungsmoduls (13a) verbunden zu werden, um die wiederaufladbare Batterieeinhheit (11) aufzuladen,
wobei ein drittes Verbindungsbauteil (210c) des ersten Stromversorgungssteckers oder der ersten Buchse (12a) konfiguriert ist, um eine galvanische Verbindung zu einer Antennenanordnung (22) über ein Antennenverbindungsbauteil (21c) eines Steckers oder einer Buchse des ersten Photovoltaik-Stromversorgungsmoduls (13a) bereitzustellen, und
wobei der zweite, weitere Stromversorgungsanschluss (12b) ein Stecker oder eine Buchse mit nicht mehr als zwei galvanisch getrennten Verbindungsbauteilen ist, die konfiguriert sind, um elektrische Energie von dem weiteren Photovoltaik-Stromversorgungsmodul (13b) zu übertragen, wenn das weitere Photovoltaik-Stromversorgungsmodul (13b) mit dem zweiten, weiteren Stromversorgungsanschluss (12b) verbunden ist, um die wiederaufladbare Batterieeinhheit (11) aufzuladen.

2. Fenster- oder Architekturabdeckungssystem nach Anspruch 1, wobei eine elektrische Schaltung (29), wie z. B. eine fest verdrahtete elektrische Schaltung, bereitstellt, dass das erste Photovoltaik-Modul (13a) und das weitere Photovoltaik-Modul (13b) parallel verbunden sind, wenn sie mit dem ersten bzw. zweiten Stromversorgungsanschluss (12a, 12b) verbunden sind, um die wiederaufladbare Batterieeinhheit (11) aufzuladen.

3. Fenster- oder Architekturabdeckungssystem nach einem der vorhergehenden Ansprüche, wobei der erste und weitere Stromversorgungsanschluss (12a, 12b) auf einer Leiterplatte (PCB) (15) platziert sind.

4. Fenster- oder Architekturabdeckungssystem nach einem der vorhergehenden Ansprüche, wobei der erste und der weitere Stromversorgungsanschluss (12a, 12b) am selben Ende (26) einer Antriebseinheitsabdeckung (20) platziert und zugänglich sind, die wenigstens die Antriebseinheit, umfassend einen Elektromotor, eine Getriebeanordnung und die wiederaufladbare Batterieeinhheit (11), umschließt,
wobei ein Ein/Aus-Schalter (23) am selben Ende (26) der Antriebseinheitsabdeckung (20) wie der erste und der weitere Stromversorgungsanschluss (12a, 12b) platziert sein kann.

5. Fenster- oder Architekturabdeckungssystem nach einem der vorhergehenden Ansprüche, wobei die Antriebseinheit (10a) einen Rohrmotor mit einem Abtriebsrad umfasst, wobei der erste und der weitere Stromversorgungsanschluss (12a, 12b) am selben Ende (26) einer Rohrantriebseinheitsgehäuse (20) platziert und zugänglich sind, die wenigstens die Antriebseinheit (10a) und eine Getriebeanordnung umschließt, wobei das Abtriebsrad an einem gegenüberliegenden Ende in Bezug zu den Stromversorgungsanschlüssen (12a, 12b) angeordnet ist.

6. Fenster- oder Architekturabdeckungssystem nach einem der vorhergehenden Ansprüche, wobei das Stromversorgungssystem (2) einen Aufwärtswandler (14) umfasst, wobei der Aufwärtswandler (14) konfiguriert ist, um die Ausgangsspannung des ersten Photovoltaik-Stromversorgungsmoduls (13a) hochzutransformieren, wenn es mit dem ersten Stromversorgungsanschluss (12a) verbunden ist.

7. Fenster- oder Architekturabdeckungssystem nach Anspruch 6, wobei der Aufwärtswandler (14) außerdem konfiguriert ist, um die Ausgangsspannung des weiteren Photovoltaik-Stromversorgungsmoduls (13b) hochzutransformieren, wenn es mit dem zweiten, weiteren Stromversorgungsanschluss (12b) verbunden ist.

8. Fenster- oder Architekturabdeckungssystem nach Anspruch 6 oder 7, wobei das Stromversorgungssystem (2) außerdem eine Ladesteuerung (3) umfasst, die konfiguriert ist, um das Wiederaufladen der wiederaufladbaren Batterieeinhheit (11) zu steuern, und
wobei die Ladesteuerung (3) ein kontinuierliche Leistungsmaximierungs-(MPPT-)Steuersystem (18) umfasst, wie z. B. beinhaltend ein Stör-und-Beobachtungs-Merkmal, konfiguriert, um das Tastverhältnis und/oder die Periodendauer eines PWMmodulierten Signals (28), das an eine Schaltanordnung (Q1) des Aufwärtswandlers (14) angelegt wird, basierend auf einem oder mehreren gemessenen Ausgangsparametern des Photovoltaik-Stromversorgungsmoduls (13a) oder der Module (13a, 13b) anzupassen.

9. Fenster- oder Architekturabdeckungssystem nach einem der vorhergehenden Ansprüche, wobei das erste Photovoltaik-Stromversorgungsmodul (13a) mit dem ersten Stromversorgungsanschluss (12a) verbunden ist, um die wiederaufladbare Batterieeinhheit (11) aufzuladen, wobei das erste Photovoltaik-Stromversorgungsmodul (13a) eine Nenn-Maximalausgangsspannung aufweist, die unter 10V DC liegt, wie z. B. unter 8V DC, zum Beispiel unter 6V DC, wie z. B. um 4,2V DC,
und/oder
wobei das zweite Photovoltaik-Stromversorgungsmodul (13a) mit dem zweiten Stromversorgungsanschluss (12b) verbunden ist, um die wiederaufladbare Batterieeinhheit (11) aufzuladen, wobei das zweite Photovoltaik-Stromversorgungsmodul (13a) eine Nenn-Maximalausgangsspannung aufweist, die unter 10V DC liegt, wie z. B. unter 8V DC, zum Beispiel unter 6V DC, wie z. B. um 4,2V DC.

10. Fenster- oder Architekturabdeckungssystem nach einem der vorhergehenden Ansprüche, wobei das erste und/oder zweite Photovoltaik-Stromversorgungsmodul (13a, 13b), wenn es/sie mit dem ersten (12a) und/oder zweiten (12b) Stromversorgungsanschluss verbunden ist/sind, um die wiederaufladbare Batterieeinhheit (11) aufzuladen, eine Nenn-Maximalausgangsspannung aufweist, die wenigstens 1,3-mal niedriger, wie z. B. wenigstens 2-mal niedriger, zum Beispiel wenigstens 2,5-mal niedriger als die Nenn-Ausgangsspannung der wiederaufladbaren Batterie ist.

11. Fenster- oder Architekturabdeckungssystem nach einem der vorhergehenden Ansprüche, wobei das erste und/oder zweite Photovoltaik-Stromversorgungsmodul (13a, 13b) ein kristallines, wie z. B. ein monokristallines, Silizium-Photovoltaik-Stromversorgungsmodul ist, und/oder wobei das erste und/oder zweite Photovoltaik-Stromversorgungsmodul (13a, 13b) zwischen 3 und 15 Solarzellen, wie z. B. zwischen 5 und 9 Solarzellen, umfasst.

12. Fenster- oder Architekturabdeckungssystem nach einem der vorhergehenden Ansprüche, wobei das Steuersystem (50) in einer gemeinsamen Gehäuseeinheit (20) platziert ist,
wobei die gemeinsame Gehäuseeinheit (20) wenigstens die elektrisch angetriebene Antriebseinheit (10a), die wiederaufladbare Batterieeinhheit (11) und vorzugsweise auch einen Aufwärtswandler (14) und eine Ladesteuerung (3) zur Steuerung des Wiederaufladens der wiederaufladbaren Batterieeinhheit (11) umschließt, und
wobei die ersten und zweiten Photovoltaik-Stromversorgungsmodule (13a, 13b) außerhalb des Gehäuses (20) platziert und mit dem ersten und zweiten Stromversorgungsanschluss (12a, 12b) verbunden sind, die am Gehäuse (20) mittels ihres jeweiligen Steckers oder ihrer jeweiligen Buchse (30a, 30b) zugänglich sind.

13. Fenster- oder Architekturabdeckungssystem nach einem der vorhergehenden Ansprüche, wobei das erste und weitere Photovoltaik-Stromversorgungsmodul (13a, 13b) konfiguriert sind, um an einer gemeinsamen Schiene (9) des Fensters (4) oder der Architekturabdeckung (5) platziert zu werden, wobei die Schiene (9) am oberen Teil des Fenster- oder Architekturabdeckungssystems platziert sein kann.

14. Fenster- oder Architekturabdeckungssystem nach einem der vorhergehenden Ansprüche, ferner umfassend eine Antriebssteuerung (10b), die konfiguriert ist, um die elektrisch angetriebene Antriebseinheit (10a) zu steuern, wobei die Antriebssteuerung (10b) konfiguriert sein kann, um automatisch eine Operation der elektrisch angetriebenen Antriebseinheit (10a) nach einem vordefinierten Satz von Regeln basierend auf Eingabeinformationen wie einer oder mehrerer der folgenden zu initiieren:
Temperatursensorinformationen, Lichtsensorinformationen, Zeitinformationen, Kraftsensorinformationen, bestimmt basierend auf einem oder mehreren Kraftsensoren, wie z. B. einem oder mehreren Dehnungsmessstreifen, Regensensorinformationen und/oder Batteriezustandsinformationen.

## Revendications

1. Système de fenêtre ou de revêtement architectural (1) comprenant une fenêtre (4) et/ou un revêtement architectural (5), et un système de commande (50) pour actionner la fenêtre (4) ou le revêtement architectural (5), dans lequel le système de commande (50) comprend
au moins un dispositif de consommation d'énergie (10a, 10b) comprenant une unité d'entraînement à entraînement électrique (10a) pour régler la fenêtre et/ou le revêtement architectural, et
un système d'alimentation électrique (2) configuré pour alimenter l'au moins un dispositif de consommation d'énergie (10a-10d), dans lequel le système d'alimentation électrique (2) comprend :
- une unité de batterie rechargeable (11) configurée pour stocker de l'énergie électrique et fournir de l'énergie électrique à l'au moins un dispositif de consommation d'énergie (10a-10b), et
- un premier connecteur d'alimentation électrique (12a) configuré pour transférer l'énergie électrique d'un premier panneau d'alimentation photovoltaïque (13a), lorsque le premier panneau d'alimentation photovoltaïque (13a) est connecté au premier connecteur d'alimentation électrique (12a), de manière à recharger l'unité de batterie rechargeable (11), et dans lequel le premier panneau d'alimentation photovoltaïque (13a) est connecté au premier connecteur d'alimentation électrique (12a) ,
dans lequel le système d'alimentation électrique (2) comprend en outre un autre second connecteur d'alimentation électrique (12b) configuré pour transférer de l'énergie électrique d'un autre panneau d'alimentation photovoltaïque (13b) séparé du premier panneau d'alimentation photovoltaïque (13a), lorsque l'autre panneau d'alimentation photovoltaïque (13b) est connecté au second autre connecteur d'alimentation électrique (12b), de manière à recharger l'unité de batterie rechargeable (11), et dans lequel ledit autre panneau d'alimentation photovoltaïque (13b) est connecté au second autre connecteur d'alimentation électrique (12b),
dans lequel lesdits premier et autre connecteurs d'alimentation électrique (12a, 12b) sont tous deux des fiches ou des prises configurées pour recevoir une fiche ou une prise (30a, 30b) des premier et second panneaux d'alimentation photovoltaïque respectifs (13a, 13b),
**caractérisé en ce que** ladite première fiche ou prise d'alimentation électrique (12a) comprend au moins trois parties de connexion galvaniquement séparées (210a, 210b, 210c), dans lequel deux (210a, 210b) desdites au moins trois parties de connexion sont configurées pour être connectées galvaniquement aux parties de connexion d'alimentation électrique (21a, 21b) d'une fiche ou prise dudit premier panneau d'alimentation photovoltaïque (13a) de manière à recharger l'unité de batterie rechargeable (11),
dans lequel une troisième partie de connexion (210c) de la première fiche ou prise d'alimentation électrique (12a) est configurée pour fournir une connexion galvanique à un agencement d'antenne (22) via une partie de connexion d'antenne (21c) d'une fiche ou prise dudit premier panneau d'alimentation photovoltaïque (13a), et
dans lequel le second autre connecteur d'alimentation électrique (12b) est une fiche ou une prise avec pas plus de deux parties de connexion galvanique séparées configurées pour transférer de l'énergie électrique de l'autre panneau d'alimentation photovoltaïque (13b), lorsque l'autre panneau d'alimentation photovoltaïque (13b) est connecté au second autre connecteur d'alimentation électrique (12b), de manière à recharger l'unité de batterie rechargeable (11).

2. Système de fenêtre ou de revêtement architectural selon la revendication 1, dans lequel un circuit électrique (29), tel qu'un circuit électrique câblé, prévoit que ledit premier panneau photovoltaïque (13a) et l'autre panneau photovoltaïque (13b) sont connectés en parallèle lorsqu'ils sont connectés respectivement aux premier et second connecteurs d'alimentation électrique (12a, 12b) pour recharger l'unité de batterie rechargeable (11).

3. Système de fenêtre ou de revêtement architectural selon l'une quelconque des revendications précédentes, dans lequel les premier et autre connecteurs d'alimentation électrique (12a, 12b) sont placés sur une carte de circuit imprimé (PCB) (15).

4. Système de fenêtre ou de revêtement architectural selon l'une quelconque des revendications précédentes, dans lequel les premier et autre connecteurs d'alimentation électrique (12a, 12b) sont placés à la même extrémité (26) d'un boîtier d'unité d'entraînement (20) et accessibles depuis cette extrémité, renfermant au moins l'unité d'entraînement comprenant un moteur électrique, un système d'engrenage et l'unité de batterie rechargeable (11),
dans lequel un interrupteur marche/arrêt (23) peut être placé à la même extrémité (26) du boîtier de l'unité d'entraînement (20) que les premier et autre connecteurs d'alimentation électrique (12a, 12b).

5. Système de fenêtre ou de revêtement architectural selon l'une quelconque des revendications précédentes, dans lequel l'unité d'entraînement (10a) comprend un moteur tubulaire avec une roue de sortie, dans lequel les premier et autre connecteurs d'alimentation électrique (12a, 12b) sont placés à la même extrémité (26) d'un boîtier d'unité d'entraînement tubulaire (20) et accessibles depuis cette extrémité, renfermant au moins l'unité d'entraînement (10a) et un système d'engrenage, dans lequel la roue de sortie est située à une extrémité opposée par rapport aux connecteurs d'alimentation électrique (12a, 12b).

6. Système de fenêtre ou de revêtement architectural selon l'une quelconque des revendications précédentes, dans lequel le système d'alimentation électrique (2) comprend un convertisseur élévateur (14), dans lequel le convertisseur élévateur (14) est configuré pour augmenter la tension de sortie du premier panneau d'alimentation photovoltaïque (13a) lorsqu'il est connecté au premier connecteur d'alimentation électrique (12a).

7. Système de fenêtre ou de revêtement architectural selon la revendication 6, dans lequel le convertisseur élévateur (14) est en outre configuré pour augmenter la tension de sortie de l'autre panneau d'alimentation photovoltaïque (13b) lorsqu'il est connecté au second autre connecteur d'alimentation électrique (12b).

8. Système de fenêtre ou de revêtement architectural selon la revendication 6 ou 7, dans lequel le système d'alimentation électrique (2) comprend en outre un dispositif de commande de charge (3) configuré pour commander la recharge de l'unité de batterie rechargeable (11), et
dans lequel le dispositif de commande de charge (3) comprend un système de commande de suivi du point de puissance maximale (MPPT) (18), comportant par exemple une fonction Perturb And Observe, configuré pour adapter le rapport cyclique et/ou la période de temps d'un signal modulé PWM (28) appliqué à un agencement de commutation (Q1) du convertisseur élévateur (14) sur la base d'un ou plusieurs paramètres de sortie mesurés du panneau d'alimentation photovoltaïque (13a) ou des panneaux (13a, 13b).

9. Système de fenêtre ou de couverture architecturale selon l'une quelconque des revendications précédentes, dans lequel le premier panneau d'alimentation photovoltaïque (13a) est connecté au premier connecteur d'alimentation électrique (12a) de manière à recharger l'unité de batterie rechargeable (11), dans lequel ledit premier panneau d'alimentation photovoltaïque (13a) présente une tension de sortie maximale nominale inférieure à 10 V CC, telle qu'inférieure à 8 V CC, telle qu'inférieure à 6 V CC, telle qu'autour de 4,2 V CC,
et/ou
dans lequel le second panneau d'alimentation photovoltaïque (13a) est connecté au second connecteur d'alimentation électrique (12b) de manière à recharger l'unité de batterie rechargeable (11), dans lequel ledit second panneau d'alimentation photovoltaïque (13a) présente une tension de sortie maximale nominale inférieure à 10 V CC, telle qu'inférieure à 8 V CC, telle qu'inférieure à 6 V CC, telle qu'autour de 4,2 V CC.

10. Système de fenêtre ou de revêtement architectural selon l'une quelconque des revendications précédentes, dans lequel ledit premier et/ou ledit second panneau d'alimentation photovoltaïque (13a, 13b), lorsqu'il est connecté au premier (12a) et/ou au second (12b) connecteur d'alimentation électrique de manière à recharger l'unité de batterie rechargeable (11), présente une tension de sortie maximale nominale qui est au moins 1,3 fois inférieure, telle qu'au moins 2 fois inférieure, telle qu'au moins 2,5 fois inférieure à la tension de sortie nominale de la batterie rechargeable.

11. Système de fenêtre ou de revêtement architectural selon l'une quelconque des revendications précédentes, dans lequel ledit premier et/ou ledit second panneau d'alimentation photovoltaïque (13a, 13b) est un panneau d'alimentation photovoltaïque cristallin tel qu'un panneau d'alimentation photovoltaïque en silicium monocristallin, et/ou dans lequel ledit premier et/ou ledit second panneau d'alimentation photovoltaïque (13a, 13b) comprend entre 3 et 15 cellules solaires, par exemple entre 5 et 9 cellules solaires.

12. Système de fenêtre ou de revêtement architectural selon l'une quelconque des revendications précédentes, dans lequel ledit système de commande (50) est placé à l'intérieur d'une unité de boîtier commune (20),
dans lequel l'unité de boîtier commune (20) renferme au moins l'unité d'entraînement à entraînement électrique (10a), l'unité de batterie rechargeable (11), et de préférence également un convertisseur élévateur (14) et un dispositif de commande de charge (3) pour commander la recharge de l'unité de batterie rechargeable (11), et
dans lequel lesdits premier et second panneaux d'alimentation photovoltaïque (13a, 13b) sont placés à l'extérieur du boîtier (20) et connectés aux premier et second connecteurs d'alimentation électrique (12a, 12b) qui sont accessibles au niveau du boîtier (20) au moyen de chacun de leur fiche ou prise (30a, 30b).

13. Système de fenêtre ou de revêtement architectural selon l'une quelconque des revendications précédentes, dans lequel lesdits premier et autre panneaux d'alimentation photovoltaïque (13a, 13b) sont configurés pour être placés sur une piste commune (9) de ladite fenêtre (4) ou dudit revêtement architectural (5), dans lequel la piste (9) peut être placée sur la partie supérieure du système de fenêtre ou de revêtement architectural.

14. Système de fenêtre ou de revêtement architectural selon l'une quelconque des revendications précédentes, comprenant également un dispositif de commande d'entraînement (10b) configuré pour commander l'unité d'entraînement à entraînement électrique (10a), dans lequel le dispositif de commande d'entraînement (10b) peut être configuré pour initier automatiquement une opération de l'unité d'entraînement à entraînement électrique (10a) selon un ensemble prédéfini de règles basées sur des informations d'entrée telles qu'une ou plusieurs des suivantes :
des informations sur le capteur de température, des informations sur le capteur de lumière, des informations sur l'heure, des informations sur le capteur de force déterminées sur la base d'un ou plusieurs capteurs de force tels qu'une ou plusieurs jauges de contrainte, des informations sur le capteur de pluie et/ou des informations sur l'état de la batterie.
